# DEMANDE DE BREVET EUROPEEN

(11) **EP 1 498 711 A1**
(43) Date de publication de la demande: **19.01.2005**
(21) Numéro de dépôt: 04291817.7
(22) Date de dépôt: 16.07.2004
(51) Int. Cl.: G01K 1/02

(54) **Système de suivi de la chaîne du froid, module et procédé pour sa mise en oeuvre**

(30) Priorité: 16.07.2003 FR 0308681
(71) Demandeur: Oceasoft S.A., 34000 Montpellier (FR)
(72) Inventeur: Rousseau, Laurent, 34000 Montpellier (FR)
(74) Mandataire: Pontet, Bernard

(57) **Abrégé**

Système, module et procédé dans lesquels on provoque l'ouverture/fermeture des portes d'une enceinte et la durée d'ouverture, en détectant la présence/absence de lumière dans ladite enceinte à l'aide d'un capteur de luminosité prévu dans le module de suivi.

Ce moyen permet d'éviter le câblage de systèmes « à contact » fragiles et peu économiques. Il est particulièrement adapté à être utilisé pour le respect de la chaîne du froid dans des enceintes réfrigérées, notamment une chambre froide ou un camion frigorifique.

## Description

La présente invention concerne un système de suivi de la chaîne du froid, un module et un procédé pour sa mise en oeuvre.

De manière plus précise, elle vise un système électronique/informatique utilisant un capteur/enregistreur de températures numérique.

L'invention s'applique en particulier au suivi de la chaîne du froid, permettant le contrôle de la température au cours du stockage et du transport de produits thermo-sensibles, notamment dans les domaines agroalimentaires et médical.

Les capteurs/enregistreurs de températures actuels n'utilisent que très peu la transmission radio-fréquences. Il s'agit plus souvent de systèmes à lecture des informations par « contact ». D'autre part, ces enregistreurs de température n'enregistrent que le seul paramètre physique « température », comme leur nom l'indique. Or, le suivi de la chaîne du froid impose maintenant de connaître précisément d'autres paramètres, comme le temps d'immobilisation à un quai de chargement et le temps passé avec les portes ouvertes ou fermées dans le cas du transport. Pour les aspects stockage, les temps d'ouverture et de fermeture des enceintes (temps susceptibles de faire entrer des calories dans l'enceinte) sont très importants pour la bonne connaissance des échanges thermiques et des cas de rupture de la chaîne du froid. On entend par portes, les portes d'accès à une enceinte mobile (conteneur, camion) ou une enceinte fixe (chambre froide, entrepôt). Actuellement, pour contrôler une ouverture/fermeture de porte d'enceinte, on utilise des contacteurs au niveau de la porte avec voyants lumineux ou alarme locaux. Il n'est prévu aucun suivi, ni contrôle à distance.

A ce jour aucun système ne permet ainsi de connaître simultanément, le cas échéant à distance et en temps réel :
- la température enregistrée dans une phase (chargement, déchargement, stockage, etc.) ;
- les évènements « arrivée/départ d'une zone géographique» (quai de chargement) et le « temps passé sur cette zone » ; et/ou
- les évènements « ouverture/fermeture de porte » (nombre et durée) dans une zone géographique et/ou au cours d'une phase.

La présente invention a pour but notamment de pallier ces inconvénients.

Elle propose un système de suivi de la chaîne du froid dans une enceinte contenant un produit thermosensible comprenant :
- au moins un module de suivi destiné à être placé dans ladite enceinte comprenant :
   - des moyens de mesure de la température à l'intérieur de ladite enceinte ; et
   - des moyens de mémorisation de l'information de température correspondante ; et
- des moyens de lecture desdits moyens de mémorisation,
caractérisé en outre par des moyens pour contrôler au moins un paramètre supplémentaire associé à un évènement dans ladite chaîne du froid.

Ainsi grâce à l'invention, en cas de rupture de la chaîne du froid, en procédant par corrélation des données enregistrées, les causes seront plus facilement identifiables.

Pour connaître en temps réel les données enregistrées dans le module de suivi, le système peut comprendre des moyens de communication par radio-fréquences entre le module de suivi et au moins un site géographique de communication.

Selon les cas, enceintes mobiles ou fixes et type de produit thermosensible, l'évènement supplémentaire peut être lié à l'ouverture/fermeture de porte(s) de l'enceinte et/ou à la localisation de l'enceinte dans une zone géographique. L'invention permet ainsi de connaître précisément par corrélation le suivi de la température et par exemple les temps passés sur des zones géographiques différentes et/ou les temps passés avec portes ouvertes et fermées.

Plus précisément, pour ce qui est d'un suivi de la présence de l'enceinte dans une zone géographique, la présente invention utilise le principe d'entrée/sortie d'une zone de communication radio. On fait ainsi correspondre une zone de communication radio à une zone géographique dans laquelle est placé un récepteur radio adapté à entrer en communication avec un émetteur radio de module de suivi. Dans une zone de communication, les moyens d'émission de chaque module étant adaptés à répondre au récepteur de ladite zone de communication en s'identifiant par un numéro d'identification propre. De préférence, le module récepteur d'une zone de communication interroge en mode « Broadcast » (non personnalisé) l'ensemble des modules pouvant être présents sur ladite zone, et interroge à des intervalles de temps déterminés.

Selon un mode particulier de réalisation, permettant de limiter avantageusement les échanges radio et la surconsommation électrique qu'entraînent les réponses des modules de suivi, chaque module de suivi comprend une fonction de mise en veille. Cette fonction peut être réalisée en prévoyant qu'un module nouvellement interrogé, et donc nouvellement entrant dans la zone de communication, s'identifie en émettant un signal radio et mémorise le N° du récepteur interrogeant la date et l'heure de cette première identification. La mise en veille consiste ensuite, à chaque nouvelle interrogation à ne pas répondre (c'est-à-dire à ne pas s'identifier) si le numéro de récepteur interrogeant est le même et à mémoriser à chaque fois la date et heure de cette nouvelle interrogation.

La présente invention propose également un procédé correspondant.

Selon l'invention, il est proposé de suivre l'ouverture/fermeture des portes de l'enceinte et de la durée d'ouverture, en détectant la présence/absence de lumière dans ladite enceinte à l'aide d'un capteur de luminosité prévu dans le module de suivi. Ce moyen permet d'éviter le câblage de systèmes « à contact » fragiles et peu économiques.

Selon d'autres caractéristiques particulières, le système selon l'invention comprend des moyens d'alarme adaptés à émettre une alarme en fonction d'au moins une consigne programmée dans ledit module de suivi, ladite consigne correspondant par exemple à une durée de dépassement par rapport à un seuil haut et/ou bas de température.

De manière avantageuse, le module de suivi peut être adapté à transmettre un signal d'alarme à un site de contrôle via lesdits moyens de communication par radio-fréquences en même temps qu'une donnée d'identification, ledit site de contrôle étant adapté à prendre les mesures nécessaires en temps réel pour une intervention sur ledit module.

Par ailleurs, les moyens de mémorisation du module de suivi sont adaptés à mémoriser selon un protocole défini à l'avance les données relatives au suivi de la température dans l'enceinte et relatives au suivi du ou des évènements supplémentaires. D'autre part, les moyens de communication par radio-fréquences du module de suivi peuvent être adaptés à transmettre en temps réel ou sur demande les données mémorisées à un site de contrôle. La lecture des données mémorisées peut ainsi être faite à n'importe quel moment sur demande ou en fin de parcours. Dans le cas d'un système comprenant uniquement un module de suivi de la température et de l'ouverture/fermeture des portes, il n'est pas nécessaire que le système comprennent des moyens de communication radio, les données de température et de luminosité mémorisées peuvent être simplement récupérées et lues en fin de parcours ou d'utilisation du module de suivi.

La présente invention sera mieux comprise et d'autres avantages apparaîtront à la lumière de la description qui va suivre d'un exemple de réalisation, description faite en référence aux dessins sur lesquels :
- la figure 1 illustre les différents éléments du système selon cet exemple de réalisation ; et
- la figure 2 est un schéma blocs illustrant le fonctionnement des moyens de suivi de l'entrée/sortie du module du système de la figure 1.

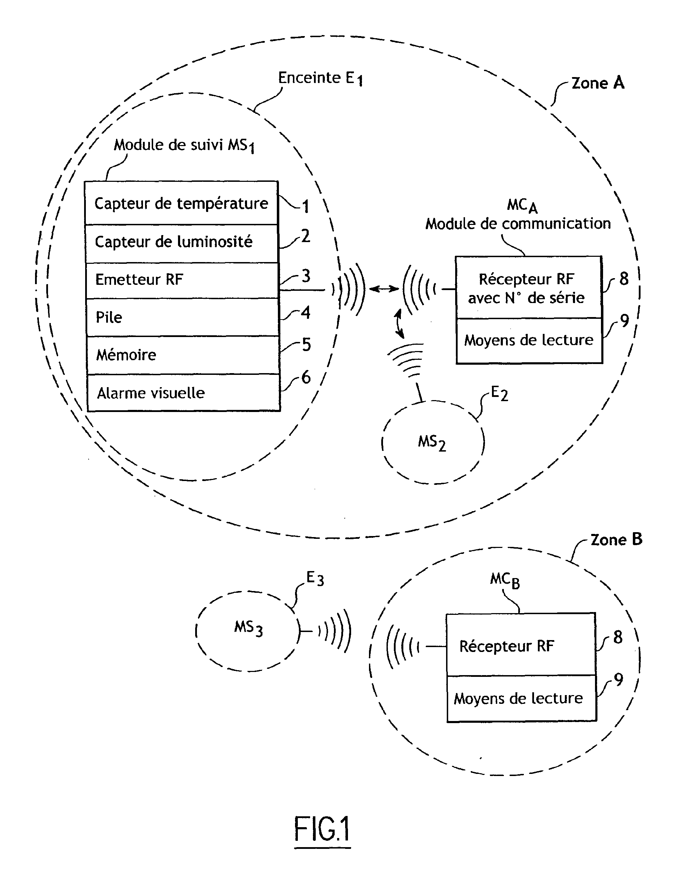

Le système selon l'invention a pour but le suivi et la corrélation dans le temps d'évènements marquants pouvant intervenir dans la chaîne du froid à l'intérieur d'une enceinte mobile ou fixe contenant un ou plusieurs produits thermosensibles. Selon l'exemple choisi et représenté sur les figures, le système permet le suivi de 3 types d'événements : un changement de température, une ouverture/fermeture des portes de l'enceinte et l'arrivée/départ d'une zone géographique définie préalablement. Dans l'exemple choisi, la figure 1 illustre le suivi de trois enceintes E1, E2, E3... mobiles, susceptibles d'entrer dans deux zones géographiques différentes A et B. Chaque enceinte E1, E2, E3... contient selon l'invention un module de suivi, respectivement MS1, MS2, MS3..., et chaque zone A et B un module de communication MCA, MCB avec lesdits modules de suivi.

Chaque module de suivi (MS1, MS2 et MS3) comprend :
- des moyens 1 de mesure de températures : un capteur numérique de températures, pouvant être une sonde déportée avec un câble ;
- des moyens 2 de mesure de la luminosité, du type capteur LDR ou phototransistor ;
- des moyens 3 de communication en radio-fréquences : un émetteur de portée définie, par exemple 500 m en champ libre ; fréquence de fonctionnement définie, par exemple 868 Mhz ; modes de fonctionnement Broadcast et répéteur ;
- une source d'énergie 4 : par exemple une pile au format ½ AA au lithium ;
- des moyens 5 de mémorisation programmables par commande soit directe, soit par radio-fréquences, prévus pour mémoriser :
   - des données de fonctionnement (horloge interne, intervalles de mesures, gestion d'états par exemple d'alarmes, N° d'identification propre, etc.) ;
   - des données relatives aux mesures de températures (pas de mesure, pour chaque mesure date et heure) ;
   - des données relatives aux ouvertures/fermetures des portes de l'enceinte (mesures de la luminosité) ;
   - des données relatives à l'arrivées/départ de l'enceinte dans une zone géographique (absence ou présence de communications RF) ;
   - des moyens d'alarme 6, notamment visuelle pour indiquer l'occurrence ou pas d'un évènement marquant dans le suivi.

Chaque module de communication MCA, MCB, comprend :
- un récepteur 8 en radio-fréquences possédant un numéro d'identification qui lui est propre, par exemple un modem réglé sur la fréquence d'émission des émetteurs des modules de suivi MS1, MS2, MS3, ayant un numéro de série propre ; et
- des moyens 9 de lecture à distance des données de suivi enregistrées dans les moyens de mémorisation 5 des différents modules de suivi MS1, MS2, MS3.

Un exemple de programmation de la mémoire 5 d'un module de suivi (lecture/écriture de données de fonctionnement et de suivi) est donné ci-après : chaque ligne correspond à une zone d'enregistrement soit en lecture seule soit en lecture/écriture :

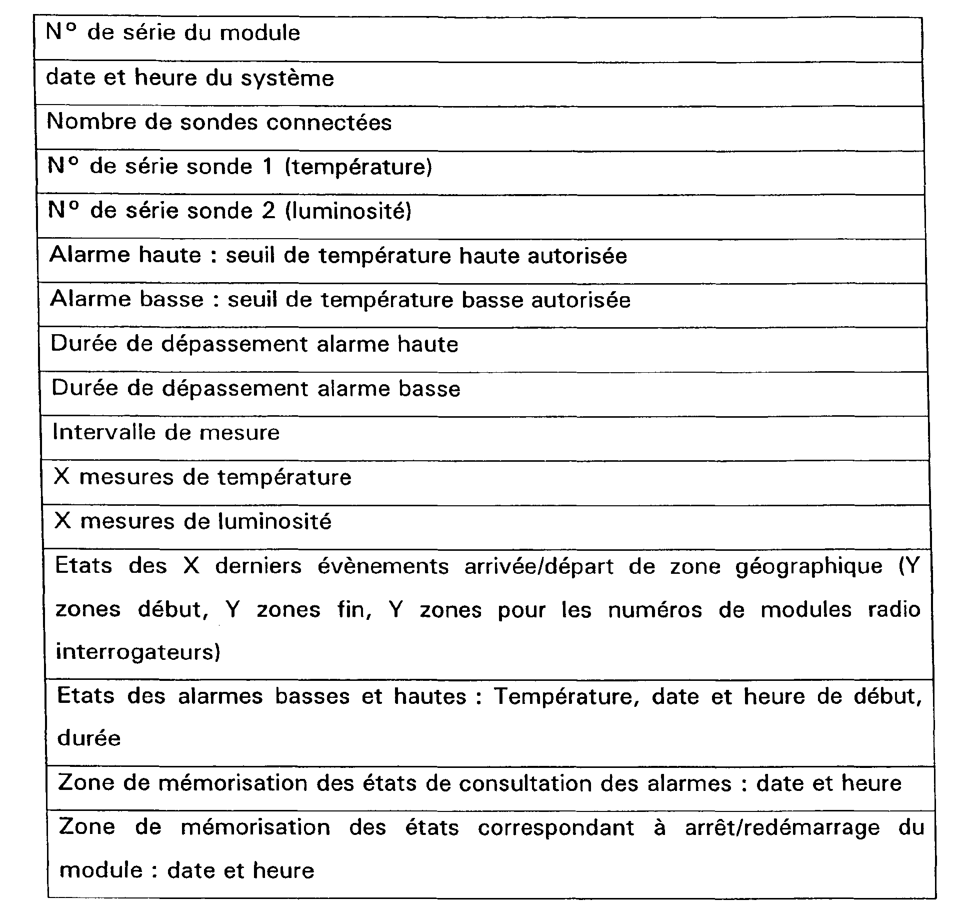

### Fonctionnement du système

### 1. Gestion des alarmes sur températures :

Comme indiqué ci-dessus on fixe à l'avance, en fonction du produit thermosensible contenu dans l'enceinte, les paramètres suivants :
- un seuil de température haute et/ou un seuil de température basse ; et
- une durée de dépassement autorisée du seuil haut et/ou une durée de dépassement autorisée du seuil bas.

Le module enregistre au cours du temps la somme des durées des dépassements depuis la mise en route. Si cette somme est inférieure à la valeur autorisée, un état négatif d'alarme est enregistré. Si cette somme est supérieure à la valeur autorisé, un état positif d'alarme est enregistré, avec la température correspondante, la date et l'heure de début et la durée. La consultation des états d'alarme peut être faite de manière permanente en direct pour pouvoir faire intervenir le cas échéant un opérateur rapidement. Dans ce cas, le système prévoit que le module communique par RF (GSM, facsimile, etc.) un état d'alarme (ou simplement l'occurrence d'un état positif de l'alarme) à un site de contrôle déterminé (par exemple s'il est dans une zone géographique le site de communication correspondant) et un numéro de téléphone de l'opérateur pour que celui-ci puisse intervenir sur l'enceinte. La consultation des états d'alarme peut être faite également à l'arrivée de l'enceinte en fin de parcours ou à chaque arrivée dans une zone géographique ou encore lorsque cela est souhaité. Dans ce cas, le module peut comprendre des moyens de lecture de type bouton poussoir pour actionner une diode d'affichage avec une couleur selon l'état ou un clignotement particulier. Ainsi, à l'arrivée de l'enceinte, l'état de l'alarme est contrôlé et si un dépassement de seuil s'est produit il est visualisé rapidement. Par la suite, la lecture complète des données enregistrées dans le module à l'aide d'un logiciel approprié donnera le détail des évènements qui se sont produits et la corrélation éventuelle entre un dépassement de température, une ouverture de porte de l'enceinte prolongée sur un lieu géographique particulier.

### 2. Gestion des ouverture/fermeture des portes d'une enceinte, durée de chaque ouverture

Le capteur de luminosité 2 du module de suivi a pour but de détecter la présence ou l'absence de lumière dans l'enceinte. La présence de lumière indique l'ouverture de la porte de l'enceinte. La porte fermée implique que le capteur est plongé dans le noir. Chaque changement d'état est mémorisé et l'horloge intégrée au module permet de connaître la date, l'heure et la durée de chaque évènement. Ces évènements sont mémorisés puis le cas échéant transmis par radio-fréquence ou lus à un instant t pouvant correspondre à la fin du parcours de l'enceinte. Ces changements d'états permettent de mettre en corrélation une élévation de température avec une ouverture de porte par exemple. Le système peut en outre prévoir d'augmenter la fréquence de mesure de la température à l'intérieur de l'enceinte lorsque ses portes sont ouvertes.

### 3. Gestion des entrée/sortie de zone géographique

Le système utilise le principe « d'entrée/sortie d'une zone de communication radio » pour déterminer les arrivées/départs d'une zone géographique et le temps passé sur cette zone. Ainsi, selon l'invention on fait correspondre une zone géographique avec une zone de communication radio. L'entrée dans la zone de communication radio donne la date et l'heure d'arrivée sur la zone géographique et la sortie de la zone de communication radio donne la date et l'heure de sortie de ladite zone. La différence entre les deux dates et heures donne ensuite le temps passé sur la zone.

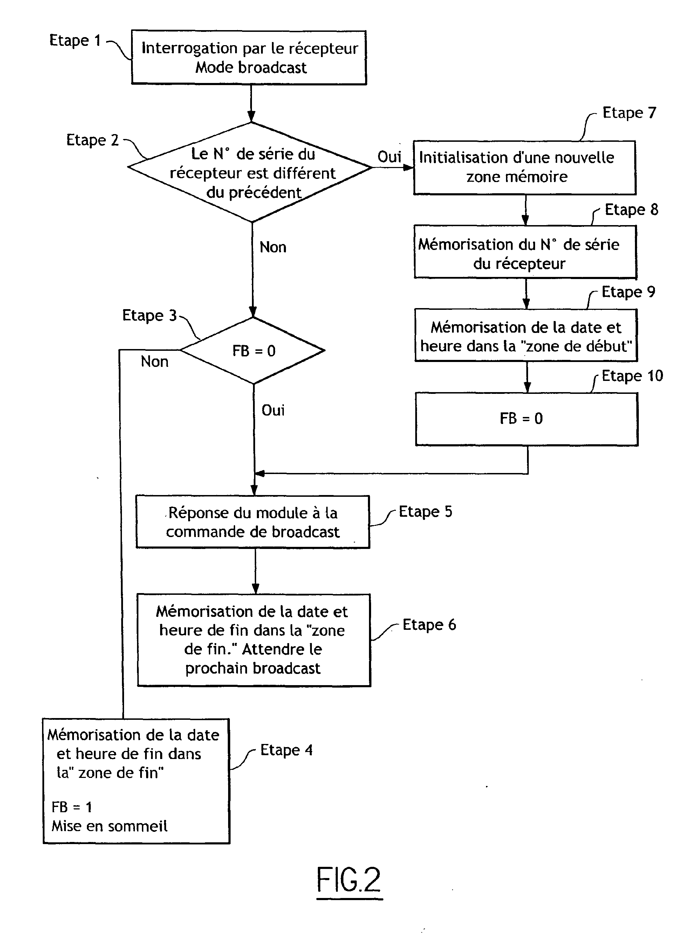

Le fonctionnement du système est décrit ci-après plus en détails en se référant à l'exemple particulier de système de la figure 1 et au schéma bloc de la figure 2. Pour déterminer la présence ou l'absence d'un module de suivi MS1, MS2, MS3 sur une zone géographique A ou B, le module de communication MCA ou MCB de chaque zone interroge fréquemment son environnement (toutes les 5 minutes par exemple). Chaque nouveau module de suivi entré dans la zone doit répondre à cette demande pour s'identifier par son numéro de suivi. Chaque nouveau module sorti de la zone est également détecté par le fait qu'il ne s'identifie plus. Afin de limiter les échanges radio et la surconsommation électrique qu'entraîne les réponses des modules de suivi, le système utilise un principe de mise en sommeil des modules une fois identifié tout en mémorisant dans le module la zone dans laquelle il se trouve jusqu'à l'entrée dans une nouvelle zone. Le fonctionnement (voir figure 2 également) est le suivant :
- Un modem récepteur radio interroge par un mode Broadcast à un intervalle déterminé les modules de suivi radio présents dans sa zone ;
- *(1)* le récepteur radio du module de suivi présent dans la zone récupère le numéro de série du modem interrogateur ;
- il s'identifie en répondant et mémorise la date et l'heure de l'interrogation (de la première interrogation) dans une zone mémoire appelée *Zone_début*
- lors de l'appel suivant en mode Broadcast, le module de suivi vérifie le numéro de série du modem récepteur appelant. Deux cas peuvent se présenter :
   - le modem est celui qui a interrogé en mode Broadcast précédemment, le module de suivi ne fait rien et mémorise la date et l'heure de l'interrogation dans une zone appelée *Zone_fin* ;
   - le modem n'est pas celui qui a interrogé la dernière fois le module (le module de suivi a changé de zone et le modem interrogateur a donc changé), on refait la séquence *(1)* ;

Le module de suivi comporte plusieurs zones mémoires *Zone_début* et *Zone_fin* de manière à pouvoir gérer une série d'évènements départ/arrivée (par exemple 24 évènements).
On définit par ailleurs un drapeau FB : paramètre interne du module de suivi radio (case mémoire de type booléen) qui peut être modifié par une commande Radio.
FB=O : le module de suivi répond à une demande de Broadcast (correspond au fait que le module de suivi entre dans une nouvelle zone géographique).
FB = 1 : le module de suivi ne répond pas à une demande de Broadcast (correspond au fait que le module de suivi n'a pas changé de zone géographique et s'est mis en sommeil : la Zone_début et la *Zone_fin* d'une zone mémoire ont été renseignées).
Le drapeau FB repasse automatiquement à 0 si le numéro de série du modem radio qui effectue la demande de Broadcast est différent de celui du dernier modem mémorisé. Par ailleurs, le drapeau FB est modifié (mise à 1) par une commande radio après réception par le module de suivi d'une commande Broadcast.

Ainsi sur la figure 2 :
Etape 1 : un modem récepteur RF du module de communication d'une zone interroge en mode Broadcast ; on passe à l'Etape 2.
Etape 2 : le module de suivi vérifie le numéro de série du modem appelant, deux cas :
   - soit le numéro de série du modem récepteur correspond à celui qui a été précédemment enregistré dans le module de suivi dans la *Zone-début*, cela signifie que le module de suivi n'a pas changé de zone géographique ou de communication, on passe alors à l'Etape 3 ;
   - soit le numéro de série est différent ce qui signifie que le modem récepteur est différent et donc que le module de suivi a changé de zone géographique, on passe à l'Etape 7 ;
Etape 3 : on interroge le paramètre FB. Si FB = 1, on passe à l'Etape 4. Si FB = 0, on passe à l'Etape 5.
Etape 4 : le module de suivi ne répond pas à la demande de Broadcast, il mémorise la date et heure de fin dans la Zone_fin. FB est mis à 1.
Etape 5 : le module de suivi répond à la demande de Broadcast en s'identifiant ; on passe à l'Etape 6.
Etape 6 : le module de suivi mémorise la date et heure de fin dans la Zone_fin ; il se met en attente du prochain Broadcast.
Etape 7 : le module de suivi a détecté un numéro de modem différent : il initialise une nouvelle zone Mémoire. On passe à l'Etape 8.
Etape 8 : le module de suivi mémorise le nouveau n° de série du modem récepteur. On passe à l'Etape 9.
Etape 9 : le module de suivi mémorise dans la zone Mémoire la date et l'heure dans la *Zone_début.* On passe à l'étape 10.
Etape 10 : le drapeau FB est mis sur 0. On passe à l'Etape 5.

La gestion d'une sortie puis nouvelle entrée d'une même zone se fait en comparant le temps passé entre la sortie et la nouvelle entrée à un laps de temps paramétré par l'utilisateur dans le système. Si ce temps passé est inférieur au laps de temps paramétré, le système considèrera qu'il n'y a pas eu de réel départ de la zone. Si ce temps passé est supérieur au laps de temps paramétré, le système considèrera qu'il s'agit réellement d'une nouvelle entrée sur la zone.

Dans le système de la figure 1, les modules MS1 et MS2 se trouvent dans la zone de communication A du module de communication MCA, tandis que le module de suivi MS3 se trouve en dehors de la portée cette zone A et également de celle de la zone B. Selon l'exemple choisi de cette figure 1, les modules de communication MCA et MCB possèdent également des moyens de lectures des données de suivi enregistrées (état des alarmes, températures, état des ouvertures/fermetures de portes), ce qui permet d'interroger un module de suivi arrivé sur la zone et de récupérer ses données pour les traiter et les analyser ensuite sur place immédiatement ou de manière différée.

## Revendications

1. Système de suivi de la chaîne du froid dans une enceinte contenant un produit thermosensible comprenant :
- au moins un module de suivi destiné à être placé dans ladite enceinte comprenant :
- des moyens de mesure de la température à l'intérieur de ladite enceinte ; et
- des moyens de mémorisation de l'information de température correspondante ; et
- des moyens de lecture desdits moyens de mémorisation,
**caractérisé en outre par** des moyens pour contrôler au moins un paramètre supplémentaire associé à un évènement dans ladite chaîne du froid.

2. Système selon la revendication 1, **caractérisé en ce que** le système comprend des moyens de communication par radio-fréquences entre le module de suivi et au moins un site géographique de communication.

3. Système selon la revendication 2, **caractérisé en ce que** ledit évènement correspond à l'entrée/sortie dudit module de suivi dans une zone géographique donnée, lesdits moyens de contrôle comprenant lesdits moyens de communication par radio-fréquences programmés pour déterminer la présence dudit module de suivi dans ladite zone géographique.

4. Système selon la revendication 3, **caractérisé en ce que** :
- chaque module de suivi comprend des moyens d'émission en radio-fréquences et des moyens d'identification qui lui sont propres ;
- chaque zone géographique correspond à une zone de communication en radio-fréquences entre lesdits moyens d'émission en radio-fréquences d'un module et un récepteur en radio-fréquences propre à ladite zone de communication ;
dans une zone de communication, les moyens d'émission de chaque module étant adaptés à répondre au récepteur de ladite zone de communication en s'identifiant par son numéro d'identification propre.

5. Système selon la revendication 4, **caractérisé en ce que** le récepteur d'une zone de communication est adapté à interroger les moyens d'émission de module à des intervalles de temps déterminés.

6. Système selon la revendication 4 ou 5, **caractérisé en ce que** le récepteur d'une zone de communication est adapté à interroger les moyens d'émission de modules en mode non personnalisé.

7. Système selon l'une des revendications 4 à 6, **caractérisé en ce que** chaque module de suivi comprend une fonction de mise en veille, chaque module nouvellement interrogé, et donc nouvellement entrant dans la zone de communication, étant adapté à s'identifier en émettant un signal radio et à mémoriser le N° du récepteur interrogeant et la date et heure de cette première identification, la mise en veille consistant ensuite, pour ledit module de suivi à chaque nouvelle interrogation à ne pas répondre (c'est-à-dire à ne pas s'identifier) si le numéro de récepteur interrogeant est le même et à mémoriser à chaque fois la date et heure de cette nouvelle interrogation.

8. Système selon l'une quelconque des revendications précédentes, **caractérisé en ce que** ledit évènement correspond à l'ouverture/fermeture des portes de l'enceinte, lesdits moyens de contrôle comprenant dans ledit module de suivi des moyens pour détecter la présence/absence de lumière dans ladite enceinte.

9. Système selon la revendication 8, **caractérisé en ce que** la présence/absence de lumière est détectée à l'aide d'un détecteur de luminosité du type phototransistor ou LDR.

10. Système selon l'une des revendications précédentes, **caractérisé en ce que** lesdits moyens de mémorisation sont adaptés à enregistrer les données relatives au(x)dit(s) paramètre(s) supplémentaire(s).

11. Système selon l'une des revendications précédentes, **caractérisé en ce que** lesdits moyens de communication en radio-fréquences sont adaptés à transmettre des données relatives au(x)dit(s) paramètres supplémentaires.

12. Système selon l'une des revendications précédentes, **caractérisé en ce qu'**il comprend des moyens d'alarme adaptés à émettre une alarme en fonction d'au moins une consigne programmée dans ledit module de suivi.

13. Système selon la revendication 12, **caractérisé en ce que** la consigne correspond à une durée de dépassement par rapport à un seuil de température.

14. Système selon la revendication 12 ou 13, **caractérisé en ce que** ledit module est adapté à transmettre un signal d'alarme à un site de contrôle via lesdits moyens de communication par radio-fréquences ainsi qu'un numéro d'identification.

15. Module de suivi pour un système selon l'une quelconque des revendications précédentes, **caractérisé par** :
- des moyens de mesure de la température à l'intérieur de ladite enceinte ; et
- des moyens de mémorisation de l'information de température correspondante ; et
- des moyens pour contrôler au moins un paramètre supplémentaire associé à un évènement dans ladite chaîne du froid.

16. Module de suivi selon la revendication 15, **caractérisé par** des moyens de communication par radio-fréquences entre le module de suivi et au moins un site géographique de communication.

17. Module de suivi selon la revendication 16, **caractérisé en ce que** ledit évènement correspond à l'entrée/sortie dudit module de suivi dans une zone géographique donnée, lesdits moyens de contrôle comprenant lesdits moyens de communication par radio-fréquences programmés pour déterminer la présence dudit module de suivi dans ladite zone géographique.

18. Module de suivi selon la revendication 17, **caractérisé en ce qu'**il comprend des moyens d'émission en radio-fréquences et des moyens d'identification qui lui sont propres.

19. Module de suivi suivant l'une des revendications 16 à 18, **caractérisé par** une fonction de mise en veille, chaque module nouvellement interrogé, et donc nouvellement entrant dans une zone de communication, étant adapté à s'identifier en émettant un signal radio et à mémoriser le N° du récepteur interrogeant et la date et heure de cette première identification, la mise en veille consistant ensuite, pour ledit module de suivi à chaque nouvelle interrogation à ne pas répondre (c'est-à-dire à ne pas s'identifier) si le numéro de récepteur interrogeant est le même et à mémoriser à chaque fois la date et heure de cette nouvelle interrogation.

20. Module de suivi selon l'une quelconque des revendications 15 à 19, **caractérisé en ce que** ledit évènement correspond à l'ouverture/fermeture des portes de l'enceinte, lesdits moyens de contrôle comprenant des moyens pour détecter la présence/absence de lumière dans ladite enceinte.

21. Module de suivi selon la revendication 20, **caractérisé en ce que** la présence/absence de lumière est détectée à l'aide d'un détecteur de luminosité du type phototransistor ou LDR.

22. Module de suivi selon l'une des revendications 15 à 21, **caractérisé en ce que** lesdits moyens de mémorisation sont adaptés à enregistrer les données relatives au(x)dit(s) paramètre(s) supplémentaire(s).

23. Module de suivi selon l'une des revendications 15 à 22, **caractérisé en ce que** lesdits moyens de communication en radio-fréquences sont adaptés à transmettre des données relatives au(x)dit(s) paramètres supplémentaires.

24. Module de suivi selon l'une des revendications 15 à 23, **caractérisé en ce qu'**il comprend des moyens d'alarme adaptés à émettre une alarme en fonction d'au moins une consigne programmée dans ledit module de suivi.

25. Module selon la revendication 24, **caractérisé en ce que** la consigne correspond à une durée de dépassement par rapport à un seuil de température.

26. Module de suivi selon la revendication 24 ou 25, **caractérisé en ce que** ledit module est adapté à transmettre un signal d'alarme à un site de contrôle via lesdits moyens de communication par radio-fréquences ainsi qu'un numéro d'identification.

27. Procédé pour la mise en oeuvre d'un système selon l'une des revendications 1 à 14, **caractérisé en ce qu'**il consiste à :
- mesurer la température à intervalle(s) de temps donné(s) dans ladite enceinte à l'aide dudit module de suivi ;
- contrôler au moins un paramètre supplémentaire caractéristique d'un évènement pouvant intervenir dans ladite chaîne du froid ;
- enregistrer dans ledit module de suivi au cours du temps les données de température et relatives audit paramètre supplémentaire ; et
- lire lesdites données de températures et relatives audit paramètre supplémentaire et effectuer une corrélation entre elles.

28. Procédé selon la revendication 27, **caractérisé en ce que** ledit évènement correspond à l'ouverture/fermeture des portes de l'enceinte et le paramètre contrôlé correspond à l'absence/présence de lumière dans l'enceinte.

29. Procédé selon la revendication 28, **caractérisé en ce que** l'on contrôle la présence/absence de lumière à l'aide d'un capteur de luminosité.

30. Procédé selon l'une des revendications 27 à 29, **caractérisé en ce que** l'on transmet par fréquence radio lesdites données de températures et relative audit paramètre supplémentaire.

31. Procédé selon l'une des revendications 27 à 30, **caractérisé en ce que** ledit évènement correspond à l'entrée/sortie de l'enceinte dans une zone géographique donnée et le paramètre contrôlé correspond à la détection par fréquence radio de la présence de ladite enceinte dans ladite zone géographique.

32. Procédé selon revendication 31, **caractérisé en ce que** :
- on fait correspondre chaque zone géographique à une zone de communication en radio-fréquences entre lesdits moyens d'émission en radio-fréquences d'un module de suivi et un récepteur en radio-fréquences propre à ladite zone de communication ;
- on interroge à l'aide dudit récepteur ledit émetteur radio du module de suivi ; et
- chaque module répond pour s'identifier à l'aide de son numéro d'identification propre.

33. Procédé selon la revendication 32, **caractérisé en ce que** le récepteur d'une zone de communication est adapté à interroger les moyens d'émission de module à des intervalles de temps déterminés.

34. Procédé selon la revendication 32 ou 33, **caractérisé en ce que** le récepteur d'une zone de communication est adapté à interroger les moyens d'émission de modules en mode non personnalisé.

35. Procédé selon l'une des revendications 32 à 34, **caractérisé en ce que** chaque module de suivi comprend une fonction de mise en veille, selon laquelle :
- chaque module nouvellement interrogé, et donc nouvellement entrant dans la zone de communication, s'identifie en émettant un signal radio et mémorise le N° du récepteur interrogeant et la date et heure de cette première identification ;
- ce module de suivi se met en veille c'est-à-dire qu'à chaque nouvelle interrogation il ne répond pas (c'est-à-dire qu'il ne s'idenfie pas) si le numéro de récepteur interrogeant est le même et il mémorise à chaque fois la date et heure de cette nouvelle interrogation.

36. Procédé selon l'une des revendications 27 à 35, **caractérisé en ce qu'**il comprend une étape de contrôle de l'état d'une alarme fonction d'au moins une consigne programmée dans ledit module de suivi.

37. Procédé selon la revendication 36, **caractérisé en ce que** la consigne correspond à une durée de dépassement par rapport à un seuil de température.

38. Procédé selon la revendication 36 ou 37, **caractérisé en ce qu'**il comprend une étape consistant à transmettre par fréquence radio un signal caractéristique de l'état de l'alarme à un site de contrôle via lesdits moyens de communication par radio-fréquences ainsi qu'un numéro d'identification propre audit module.
